# EUROPEAN PATENT APPLICATION

(11) **EP 3 882 414 A1**
(43) Date of publication of application: **22.09.2021**
(21) Application number: 21162535.5
(22) Date of filing: 15.03.2021
(51) Int. Cl.: E04D 12/00

(54) **ROOFING UNDERLAYMENT**

(30) Priority: 16.03.2020 US 202016820466
(71) Applicant: Devpat, LLC, Fontana, CA 92335 (US)
(72) Inventor: THAGARD, Douglas F., Coto de Caza, CA California 92679 (US)
(74) Representative: Hertin und Partner Rechts- und Patentanwälte PartG mbB

(57) **Abstract**

An underlayment assembly can be installed on a roof. The assembly includes a base substrate that has a first edge portion, a second edge portion apart from the first edge portion, and a middle portion interposed between the first edge portion and the second edge portion. A first adhesive layer is formed over the first edge portion and a first polymeric liner is formed over the first adhesive layer. A second polymeric liner is formed over the second adhesive layer.

## Description

### BACKGROUND

The present disclosure relates to an underlayment assembly and a method of installing thereof.

### SUMMARY

One aspect of the invention provides a method of installing an underlayment assembly for roofing application. The method includes one or more of the features listed below:
- providing a first sheet of underlayment assembly comprising a first base substrate, an first adhesive layer formed over the first base substrate and a first polymeric liner formed over the first adhesive layer, wherein the first base substrate comprises a first edge portion, the first adhesive layer is formed over the first edge portion, and the first polymeric liner covers the first adhesive layer when viewed over the first sheet;
- providing a second sheet of underlayment assembly comprising a second base substrate, an second adhesive layer formed over the second base substrate and a second polymeric liner formed over the second adhesive layer, wherein the second base substrate comprises a second edge portion, the second adhesive layer is formed over the second edge portion, and the second polymeric liner covers the first adhesive layer when viewed over the second sheet;
- placing the first sheet of underlayment assembly over a slanted surface of a roof structure such that the first edge portion is arranged along an installation direction over the slanted surface and such that the first polymeric liner contacts the slanted surface and is interposed between the slanted surface and the first adhesive layer;
- subsequent to placing the first sheet, removing the first polymeric liner from the first sheet of underlayment assembly such that the first adhesive layer sticks to the slanted surface of the roof structure such that the first sheet is fixed to the slanted surface without using a mechanical fastener through the first sheet;
- placing the second sheet of underlayment assembly over the first sheet of underlayment assembly such that the second edge portion overlaps the first edge portion along the installation direction and such that the second polymeric liner contacts the first edge portion and is interposed between the first edge portion and the second adhesive layer; and
- subsequent to placing the second sheet, removing the second polymeric liner from the second sheet of underlayment assembly such that the second adhesive layer sticks to the first edge portion without using a mechanical fastener through the second sheet.

The method of underlayment assembly installation further includes one or more of the additional features listed below:
- the first polymeric liner comprises a first grip portion extending further from the first edge portion such that the first grip portion is exposed over the slanted surface, wherein removing the first polymeric liner comprises pulling the exposed first grip portion;
- the second polymeric liner comprises a second grip portion extending further from the second edge portion such that the second grip portion is exposed over the first sheet, wherein removing the second polymeric liner comprises pulling the exposed second grip portion;
- subsequent to removing the second polymeric liner, placing a roof batten along the installation direction over the second edge portion such that the roof batten overlaps the first edge portion and the second first edge portion when viewed in a cross section perpendicular to the slanted surface of the roof structure; and
- placing a nail through the roof batten, the first edge portion, the second first edge and slanted surface to fix the roof batten to the roof structure.

Another aspect of the invention provides an underlayment assembly for roofing application. The underlayment assembly includes one or more of the features listed below:
- a base substrate sheet extending along a longitudinal direction, wherein the base substrate comprises a first edge portion extending along the longitudinal direction, a second edge portion apart from the first edge portion and extending the longitudinal direction, and a middle portion interposed between the first edge portion and the second edge portion;
- a first adhesive layer formed over the first edge portion;
- a first polymeric liner formed over the first adhesive layer and covering the first adhesive layer;
- a second adhesive layer formed over the second edge portion; and
- a second polymeric liner formed over the second adhesive layer and covering the second adhesive layer.

The underlayment assembly further includes one or more of the additional features listed below beacon device provides one or more of the features listed below:
- the first polymeric liner includes a first grip portion extending further from the first edge portion of the base substrate such that the first grip portion does not overlap the base substrate or the first polymeric liner when viewed over the underlayment assembly;
- the second polymeric liner includes a second grip portion extending further from the second edge portion of the base substrate such that the second grip portion does not overlap the base substrate or the second polymeric liner viewed over the underlayment assembly.

The foregoing underlayment assembly and installation method, and or beacon device may further include one or more of the additional features that are defined in the original claims such that the system, method, system or beacon device may include two or more features that are defined in different claims.

### BRIEF DESCRIPTION OF THE DRAWINGS

Figure 1 shows an underlayment assembly according to an embodiment of the invention.
Figure 2A is a cross-sectional view of the underlayment assembly of Figure 1 taken at section plane 2A-2A.
Figure 2B is a cross-sectional view of an underlayment assembly according to another embodiment of the invention.
Figure 3A show the underlayment assembly of Figure 1 from a different perspective.
Figure 3B shows an underlayment assembly having an installation guide line according to an embodiment of the invention.
Figure 3C is a perspective view of the underlayment assembly of Figure 2B.
Figures 4A to 4I show a process of underlayment installation according to an embodiment of the invention.
Figure 5A is a cross-sectional view of an underlayment installation process taken at section plane 5A-5A of Figure 4A.
Figure 5B is a cross-sectional view of an underlayment installation process taken at section plane 5B-5B of Figure 4B.
Figure 5C is a cross-sectional view of an underlayment installation process taken at section plane 5C-5C of Figure 4F.
Figure 5D is a cross-sectional view of an underlayment installation process taken at section plane 5D-5D of Figure 4G.
Figure 5E is a cross-sectional view of an underlayment installation process taken at section plane 5E-5E of Figure 4H.
Figure 5F is a cross-sectional view of an underlayment installation process taken at section plane 5F-5F of Figure 4I.
Figure 6A is a partial enlarged view of section 6A in Figure 5E.
Figure 6B is a partial enlarged view of section 6B in Figure 5F.
Figure 6C shows use of a nail to fix underlayment of Figure 5F to a roof structure.
Figure 7A shows a single layer installation of underlayment according to an embodiment of the invention.
Figure 7B shows a double layer installation of underlayment according to an embodiment of the invention..
Figure 8 shows crossing of two underlayment assemblies according to an embodiment of the invention.

### DETAILED DESCRIPTION OF EMBODIMENTS

Hereinafter, embodiments of the present invention will be described with reference to the drawings. These embodiments are provided for better understanding of the present invention, and the present invention is not limited only to the embodiments. Changes and modifications apparent from the embodiments still fall in the scope of the present invention. Meanwhile, the original claims constitute part of the detailed description of this application.

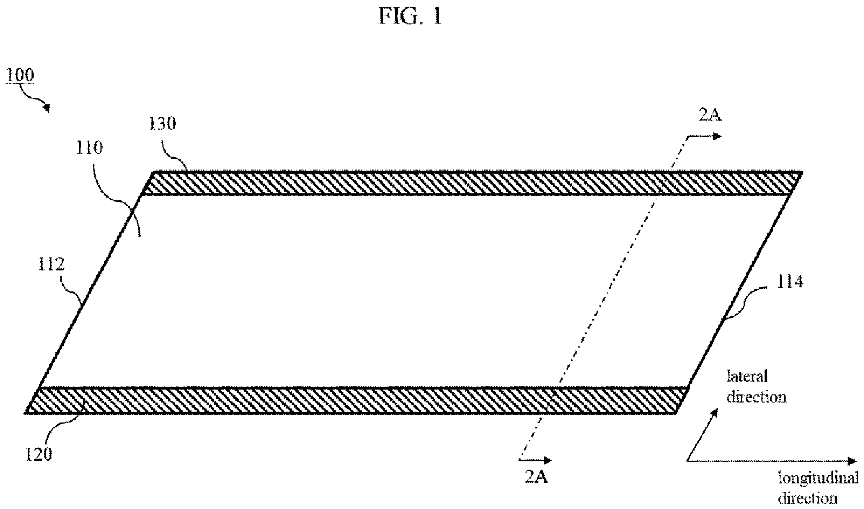

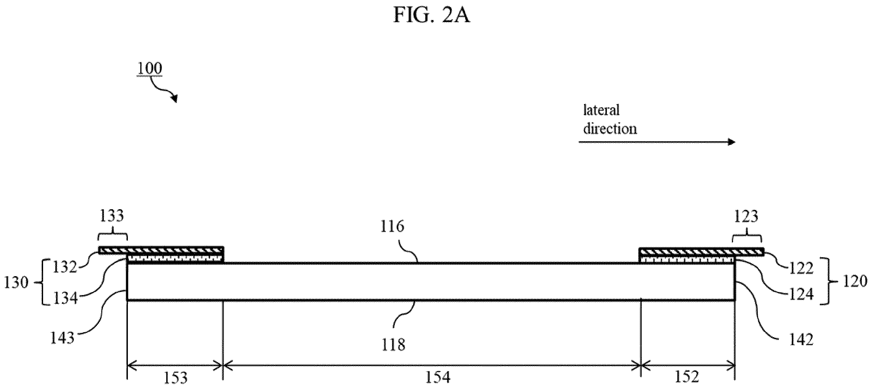

Figure 1 shows an underlayment assembly 100 according to an embodiment. Figure 2A is a cross-sectional view of the underlayment assembly 100 taken at section plane 2A-2A. The underlayment assembly 100 includes a base substrate 110, a first peel-and-stick structure 120, and a second peel-and-stick structure 130. The first peel-and-stick structure 120 includes a first adhesive layer 124 disposed over a first side end portion 152 of the base substrate 110 and further includes a first liner 122 disposed over first adhesive layer 124. The second peel-and-stick structure 130 includes a second adhesive layer 134 disposed over a second end portion 153 of the base substrate 110 and further includes a second liner 132 disposed over first adhesive layer 134. Structure and specification of the underlayment assembly will be described in detail referring to the drawings.

In embodiments, the underlayment assembly 100 is for installing over a roof deck. In an installation process, the underlayment assembly 100 is place over a roof deck, and then the liners 124 are removed such that the adhesive layers 124, 134 to a surface of the roof deck. Processes of underlayment installation will be also described in detail referring to the drawings.

### Base Substrate

Referring to Figure 1, the base substrate 110 is a sheet extending between a first end 112 and a second 114 along a longitudinal direction. Referring to Figure 2A, the base substrate 110 extends between a first side edge 142 and a second side edge 143 along a lateral direction, and has a first major surface 116 and a second major surface 118. The base substrate 110 includes a first side end portion 152, a second side end portion 153, and a middle portion 154 connecting the first side end portion 152 and the second side end portion 153.

In embodiments, the base substrate 110 is a sheet comprising an asphalt material. In embodiments, the base substrate 110 includes at least one of a fiberglass-based modified asphalt material, a styrene butadiene styrene (SBS) modified asphalt material, an asphalt saturated felt and an asphalt saturated recycle paper material. In embodiments, the base substrate 110 includes one or more coating material impregnated into a fiberglass sheet. In embodiments, the base substrate 100 can be made using one or more materials other than the mentioned above. In certain embodiments, the base substrate 100 is a sheet of FONTANA® VulcaSeal ACRILAY® SBS Modified Asphalt Fiberglass Reinforced Base Sheet. FONTANA® is a registered trademark of Fontana Paper Mills, Inc. ACRILAY® is a registered trademark to Fontana Paper Mills, Inc.

The base substrate 110 may have a thickness of about 60 mil (0.06 inches). In embodiments, the base substrate 100 has a thickness in a desirable range between 50 and 70 mils (between 0.05 inches and 0.07 inches). In other embodiments, the base substrate 100 has a thickness less than 50 mil or greater than 70 mil.

The base substrate 100 may have a width of about 36 inches. In embodiments, the base substrate 100 has a desirable width in a range between 30 and 40 inches. In other embodiments, the base substrate 100 has a width less than 30 inches or greater than 400 inches.

The base substrate 100 may have a length of about 72 feet. In embodiments, the base substrate 100 has a desirable length in a range between 30 and 80 feet. In other embodiments, the base substrate 100 has a length less than 40 feet or greater than 80 feet.

### Adhesive Layer

The underlayment assembly 100 includes one or more layers of adhesive material disposed over the base substrate 110. Referring to Figure 1 and Figure 2A, a first adhesive layer 124 is disposed over the first side end portion 152, and a second adhesive layer 134 is disposed over the second side end portion 153. No adhesive layer is disposed over the middle portion 154 of the base substrate 110. In certain embodiments, an additional adhesive layer is disposed over at least a portion of the middle portion 154. In certain embodiments, no adhesive layer is formed over one of the two side end potions 152, 153.

In embodiments, the adhesive layer 124, 134 includes an acrylic adhesive material. In embodiments, the adhesive layer includes at least one of acrylic adhesive, cyanoacrylate adhesive, epoxy adhesive, and urethane adhesive. In certain embodiments, the adhesive layer is provided using one or more materials other than the listed above. In certain embodiments, the adhesive layer includes at least one of 3M® Acrylic Adhesive 100MP, 3M® Acrylic Adhesive 200MP, 3M® Acrylic Adhesive 300MP and 3M® Acrylic Adhesive 350.

The adhesive layer 124, 134 may have a thickness of about 5.0 mils (0.127 mm). In embodiments, the adhesive layer has a desirable thickness in a range between 5.0 and 8.0 mils (between 0.005 inches and 0.008 inches). In other embodiments, the adhesive layer has a thickness less than 4.0 mil or greater than 8.0 mil.

The adhesive layer 124, 134 may have a width of about 6 inches. In embodiments, the adhesive layer has a desirable width in a range between 5 and 7 inches. In embodiments, the adhesive layer has a width less than 5 inches or greater than 7 inches.

### Liner

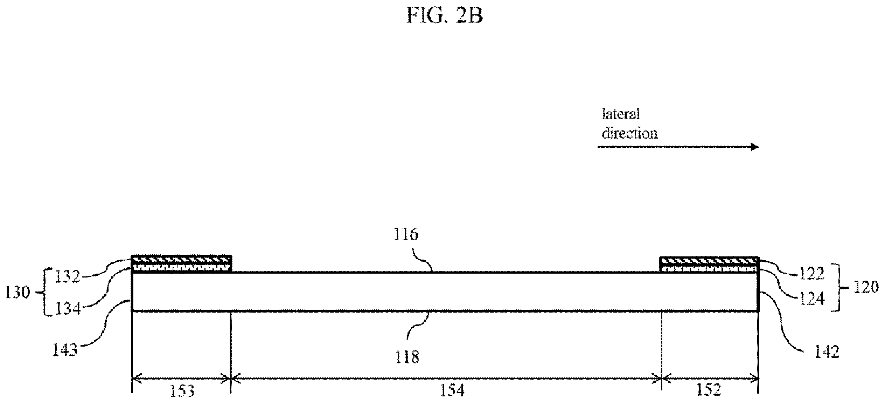

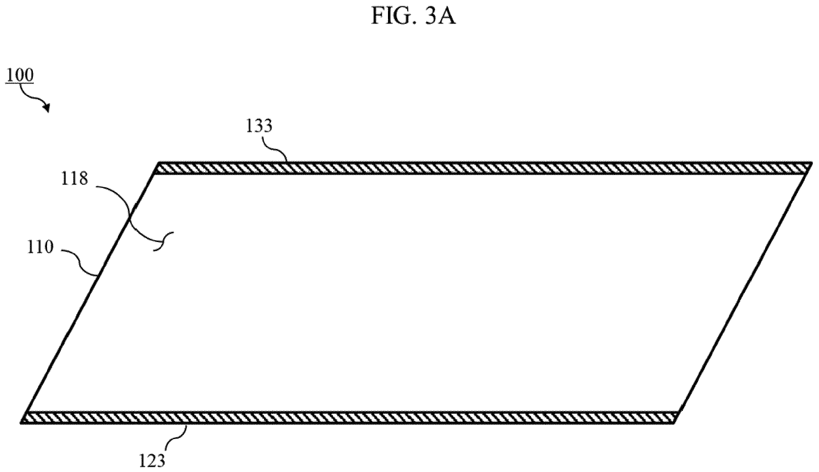

The underlayment assembly 100 includes a liner disposed over the adhesive layer 124, 134. Referring to Figure 2A, a first liner 122 is covering over the first adhesive layer 124, and a second liner 132 is covering over the second adhesive layer 134. The first liner 122 has a first handle portion 123 that extends further from the first side edge 142 along the lateral direction of the underlayment assembly 100. Referring to Figure 3A, when viewed from above the second major surface 118, the handle portions 123, 133 extend further from the base substrate 110 such that a work can grip the handle portions 123, 133 to peeling off the liners 122, 132 for attaching the base substrate 110 to a roof structure without affecting alignment of the base substrate 110 on the roof structure. In certain embodiments, as shown Figure 2B, the liner 122, 132 does not extend over the side edge 142, 143.

In embodiments, the liner 123, 133 is a polymer liner. In embodiments, the liner 123, 133 includes is a polyethylene terephthalate (PET) plastic liner. In embodiments, the liner includes at least one of PET, polypropylene (PP), polyethylene. In certain embodiments, the liner is a paper liner having a polymer coating. In embodiments, the liner can be made using one or more materials other than the mentioned above.

In embodiments, the liner 123, 133 is an opaque liner to prevent potential degradation of the adhesive layer by lights. In embodiments, the liner includes at least one of pigment, ultraviolet stabilizer and a light-blocking material.

The liner 123, 133 may have a thickness of about 4.2 mils (0.10668 mm). In embodiments, the liner has a thickness in a desirable range between 4.0 mils and 7.0 mils. In other embodiments, the liner has a thickness less than 4.0 mils or greater than 7.0 mils.

The handle portion 123, 133 have a width, from the side edge 142, 143 along the lateral direction, of about 2 inches. In embodiments, the handle portion 123, 133 has a desirable width in a range between 1 and 3 inches. In other embodiments, the handle portion 123, 133 has a width less than 1 inch or greater than 3 inches.

### Guideline Indicating Adhesive Layer

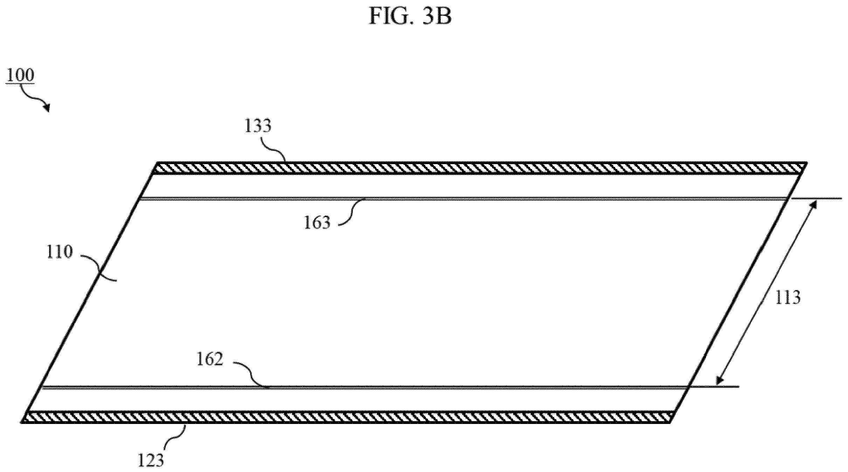

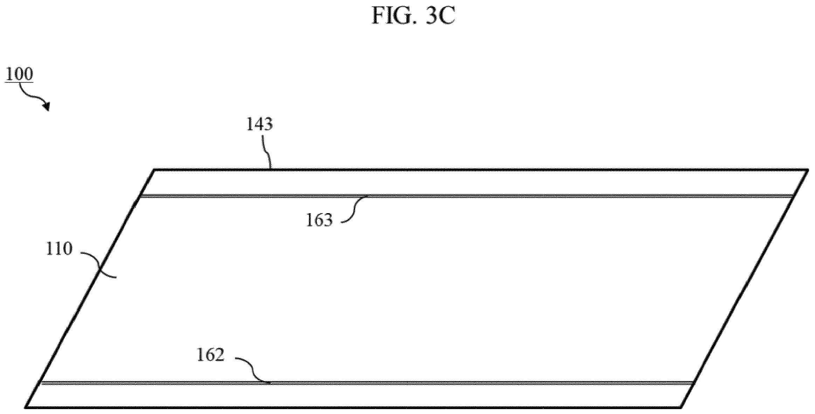

In embodiments, the underlayment assembly 100 includes one or more guidelines indicating location of the adhesive layer 124, 134. Referring to Figures 3B and 3C, a first guideline 162 extends along a boundary between the middle portion 154 and the first side end portion 152 indicating an inner edge of the adhesive layer 124. A second guideline 163 is drawn on the second major surface 118 along a boundary between the middle portion 154 and the second side end portion 152. The second guideline 163 indicates an inner edge of the adhesive layer 134 along the lateral direction.

### Manufacturing Process

In embodiments, the underlayment assembly 100 is produced by applying, to the base substrate 110, an adhesive tape including a liner and an adhesive layer disposed over the liner. In embodiments, a process to produce the underlayment assembly 100 includes: (1) preparing an adhesive tape that includes a liner 122 and an adhesive layer 124 disposed over the liner, (2) subsequently, placing the adhesive tape over the base substrate 110 at a low temperature (for example, 70°F to 100°F) such that the adhesive layer 124 contacts a surface 116 of the base substrate 110, and (3) subsequently, applying heat to the adhesive tape and the base substrate such that the adhesive layer sticks to the surface 116. In embodiments, the adhesive layer is heated over a predetermined temperature (for example, 200°F, 300°F and 300°F) such that at least a portion of the adhesive layer 124 is melt- bonded to the surface 116.

### Candidate Adhesive Tapes

In embodiments, adhesive tapes that can be used for producing the underlayment assembly 100 includes at least one of 3M® adhesive tape 9786 (5.5 mils thick adhesive 300MP, 4.2 mils thick poly-coated kraft paper liner), 3M® adhesive tape 6038 (8.0 mils thick adhesive 300MP, 4.2 mils thick poly-coated kraft paper liner), 3M® adhesive tape 468MP (5.2 mils thick adhesive 200MP, 4.2 mils thick poly-coated kraft paper liner), and 3M® adhesive tape 9775 (5.2 mils thick adhesive 300MP, 7.0 mils thick poly-coated kraft paper liner). In embodiments, adhesive tapes other than the mentioned above can be used.

### Peel Adhesion Tests to Select Adhesive /Adhesive Tape

In embodiments, an adhesive tape to produce underlayment assembly 100 can be selected based on results of a peel adhesion strength test in accordance with American Society for Testing and Materials (ASTM) D3654 standard. The following tables show peel adhesion strength of underlayment (UL) assemblies using different adhesive tapes when attached to an oriented strand board (OSB).

**TABLE 1**

| Peel Adhesion Test | | Adhesive tapes used | | |
|---|---|---|---|---|
| | | 3M® adhesive tape 468MP | 3M® adhesive tape 6038 | 3M® adhesive tape 9786 |
| Test Condition 180° peel / 20 min dwell @ room temperature (RT) | Result | 18.64 | 51.81 | 32.79 |
| | Max | 58.13 | 106.71 | 96.01 |
| | Observation | OSB fibers stuck to adhesive | | |
| Test Condition 90° peel / 30 days @ 201°F | Result | 23.3 | 64.33 | 24.95 |
| | Max | 56.96 | 126.19 | 77.29 |
| | Observation | Roof material broke/split/tear | | |

**TABLE 2**

| Peel Adhesion Test | | Adhesive tapes used | | |
|---|---|---|---|---|
| | | 3M® adhesive tape 468MP with 3M® primer WP2000 | 3M® adhesive tape 6038 with 3M® primer WP2000 | 3M® adhesive tape 9786 with 3M® primer WP2000 |
| Test Condition 180° peel / 20 min dwell @ RT | Result | 18.64 | 51.81 | 32.79 |
| | Max | 58.13 | 106.71 | 96.01 |
| | Observation | Cohesive failure | Cohesive failure | Stuck to OSB |
| Test Condition 180° peel / 24 hour dwell | Result | 23.3 | 64.33 | 24.95 |
| | Max | 56.96 | 126.19 | 77.29 |
| | Observation | Stuck to OSB | UL tear | Stuck to OSB |

**TABLE 3**

| Peel Adhesion Test | | Adhesive tapes used | | |
|---|---|---|---|---|
| | | 3M® adhesive tape 468MP with 3M® adhesive 1000NF | 3M® adhesive tape 6038 with 3M® adhesive 1000NF | 3M® adhesive tape 9786 with 3M® adhesive 1000NF |
| Test Condition 180° peel / 30 min dwell | Result | 59.36 | 144.37 | 48.64 |
| | Max | 130.9 | 144.37 | 48.64 |
| | Observation | Stuck to OSB | UL tear | Stuck to OSB |
| Test Condition 180° peel / 24 hour dwell | Result | 65.01 | 90.06 | 54.51 |
| | Max | 115.37 | 127.83 | 106 |
| | Observation | Stuck to OSB | UL tear | Stuck to OSB |

According to the results of peel adhesion strength tests shown in Tables 1-3, the tape 6038 using the adhesive 300MP shows an outstanding performance. Based on the outstanding performance, in embodiments, an adhesive tape using the adhesive 300MP can be selected over tapes using the adhesives 200MP or other. In certain embodiments, however, an adhesive tape using the adhesive 200MP can be selected over tapes based on data of one or more tests other than the peel adhesion strength test.

### Peel Adhesion Tests to Select Adhesive /Adhesive Tape

In embodiments, an adhesive tape to produce underlayment assembly 100 can be based on a shear adhesion test conducted in accordance with American Society for Testing and Materials (ASTM) D3654 standard. The following tables show shear adhesion strength of underlayment assemblies using different adhesive tapes when attached to an oriented strand board (OSB).

**TABLE 4**

| Shear Adhesion Test (SHEAR minutes) | | Adhesive tapes used | | |
|---|---|---|---|---|
| | | 3M® adhesive tape 468MP | 3M® adhesive tape 6038 | 3M® adhesive tape 9786 |
| Test Condition 20 min dwell @ RT | Result | 56.77 | 75.77 | 107.3 |
| | Observation | Pop off OSB | UL tear | Pop off UL |
| Test Condition 24 hour dwell @ RT | Result | 10,000+ | 10,000+ | 10,000+ |
| | Observation | Keep hanging | | |

**TABLE 5**

| Shear Adhesion Test (SHEAR minutes) | | Adhesive tapes used | | |
|---|---|---|---|---|
| | | 3M® adhesive tape 468MP with 3M® primer WP2000 | 3M® adhesive tape 6038 with 3M® primer WP2000 | 3M® adhesive tape 9786 with 3M® primer WP2000 |
| Test Condition 20 min dwell @ RT | Result | 236.17 | 42.33 | 39.5 |
| | Observation | Pop off UL | Pop off UL | Pop off UL |
| Test Condition 24 hour dwell @ RT | Result | 1784.7 | 84.5 | 36.6 |
| | Observation | Pop off UL | Pop off UL | Pop off UL |

**TABLE 6**

| Shear Adhesion Test (SHEAR minutes) | | Adhesive tapes used | | |
|---|---|---|---|---|
| | | 3M® adhesive tape 468MP with 3M® adhesive 1000NF | 3M® adhesive tape 6038 with 3M® adhesive 1000NF | 3M® adhesive tape 9786 with 3M® adhesive 1000NF |
| Test Condition 20 min dwell @ RT | Result | 115.8 | 59.06 | 3.8 |
| | Observation | Pop off UL | Pop off UL | Pop off UL |
| Test Condition 24 hour dwell @ RT | Result | 407 | 164.67 | 1882.67 |
| | Observation | Pop off UL | Pop off UL | Pop off UL |

According to the results of shear adhesion strength tests shown in Tables 4-6, the tape 468MP using the adhesive 200MP shows an outstanding performance. Based on the outstanding performance, in certain embodiments, an adhesive tape using the adhesive 200MP can be selected over other adhesive tapes the adhesive 300MP. In certain embodiments, however, an adhesive tape using the adhesive 300MP can be selected over other adhesive tapes using the adhesive 200MP in view of other test results (peel adhesion) as far as it meet a predetermined requirement for the shear adhesion strength (for example, over 75 for 20 min dwell condition).

### Liner Thicker Than Adhesive

In embodiments, it is advantageous when an adhesive tape has a liner thicker than its adhesive layer. A thick liner can prevent a break during handling and installing the underlayment assembly 100. In this perspective, 3M® Adhesive tape 9775MP can be selected over the other adhesive tapes listed.

### Underlayment Installation

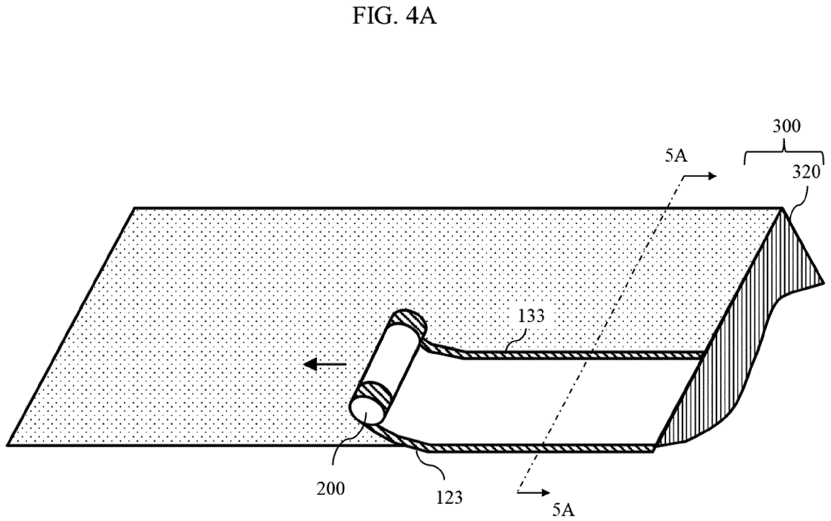

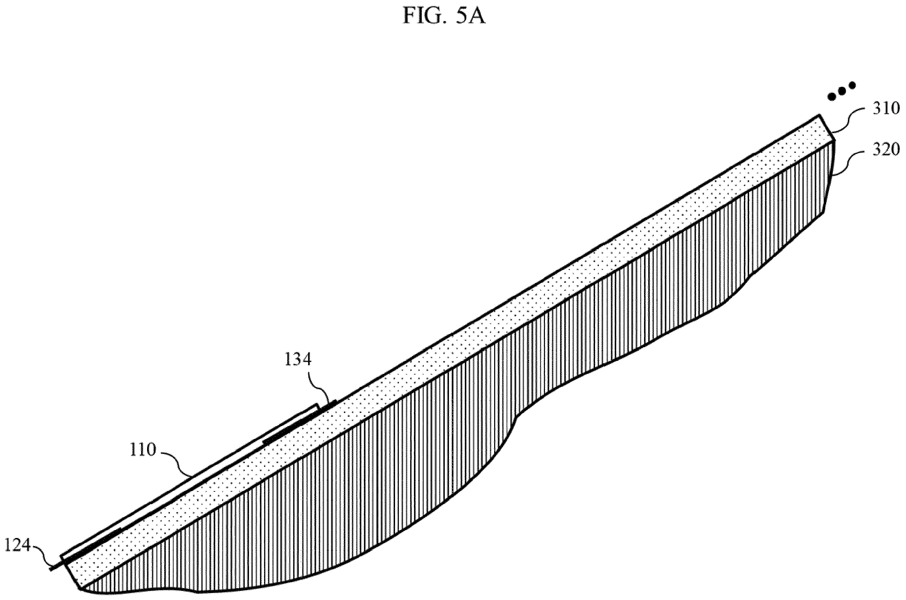

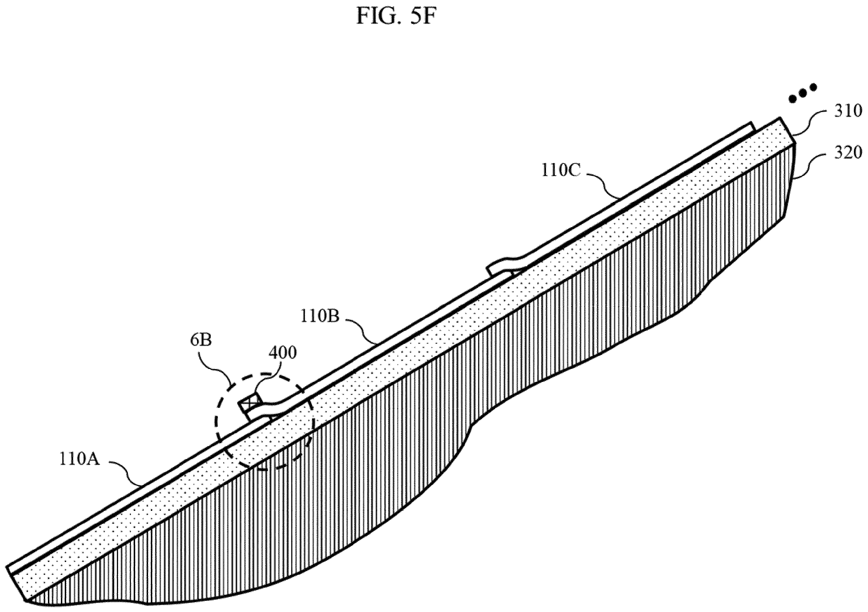

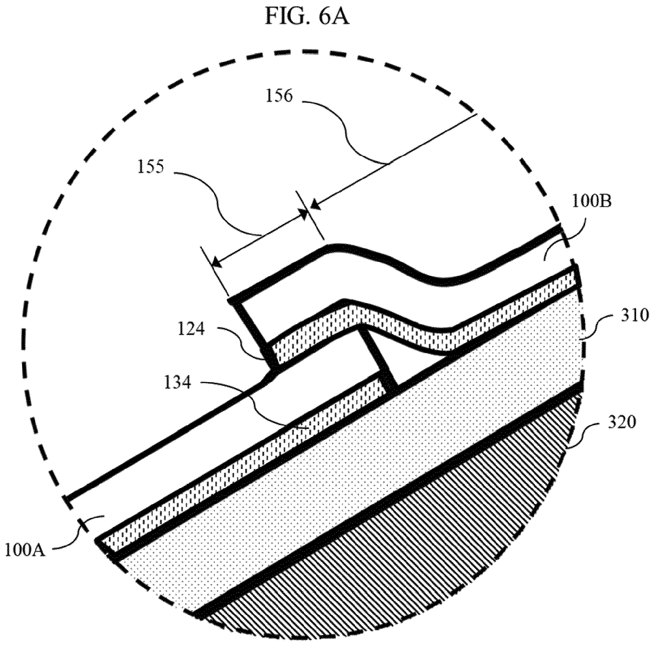

Figures 4A to 4I show a process of underlayment installation (peel-and-stick installation process) over a roof 300 having a roof deck 310 and a roof support 320. Figures 5A to 5F show cross-sectional views of the underlayment installation. Figure 6A to 6C provides partial enlarged views of the underlayment installation.

### Roll-out of Underlayment Assembly

Referring to Figure 4A, a roll 200 of a first underlayment assembly 100 is rolled out over a lower portion of the roof deck 310. The first underlayment assembly 100 can be aligned to extend along a horizontal direction over the roof. Figure 5A shows a cross-section of the underlayment assembly 100 placed over the roof deck 310. The first side edge 142 of the base substrate 110 may be aligned with a lower edge of the roof deck 310.

### No Adhesive Primer

In embodiments, it is advantageous not to apply an adhesive primer (or adhesive promotor) to the roof deck 310 or the adhesive layer 124, 134. According to the test results show in the Tables 4-6, using 3M® primer WP2000 in combination with the adhesive MP 300 or MP 200 may degrade the shear adhesion performance. According to the test results, using a water based adhesive 3M® 1000NF adhesive may degrade the shear adhesion performance, particularly when combined with the 300MP adhesive. Not using an adhesive primer would be beneficial as it simplifies an underlayment installation process. In certain embodiments, however, an adhesive primer or additional promoter can be used in an underlayment installation.

### Peel-off of Liner (Peel and Stick)

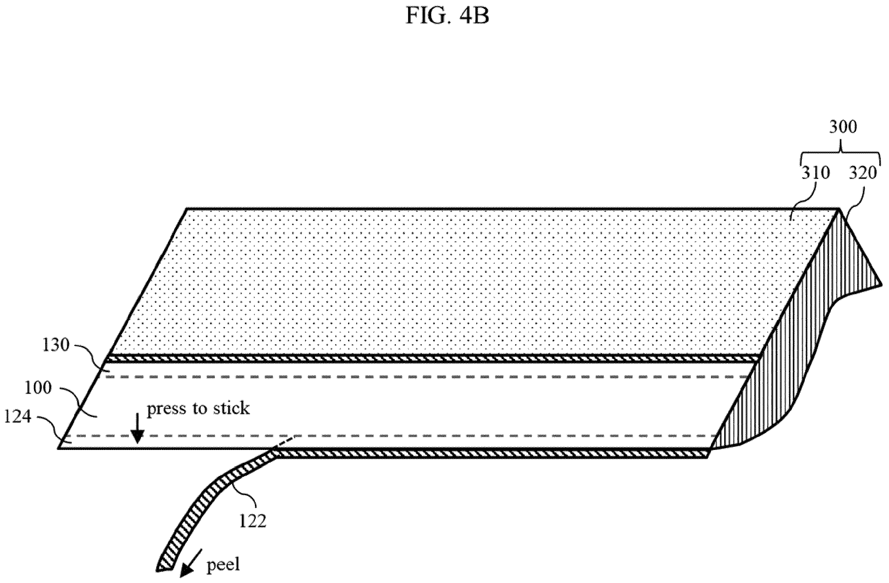

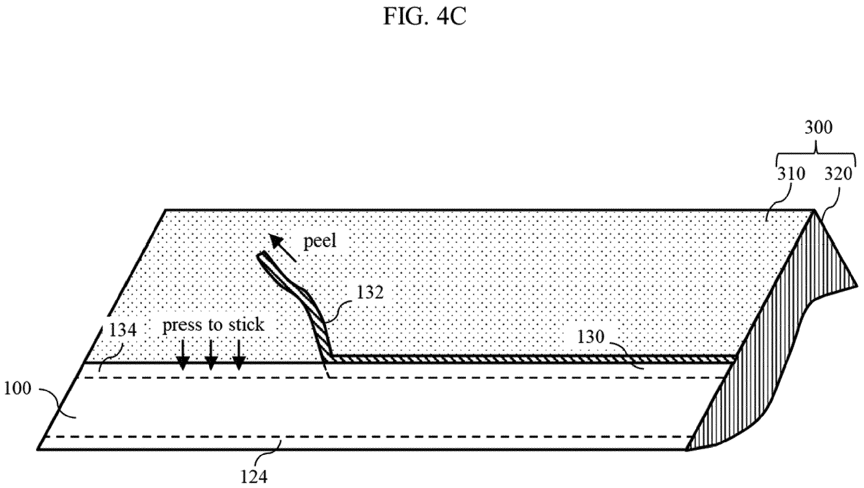

Referring to Figures 4B and 4C, subsequent to aligning the underlayment assembly 100, the liners 122, 132 are removed. The liners 122, 132 have enough strength not to break while the peeling-off process. The liners 122, 132 can be detached from the adhesive layer 124, 134 without an excessive force that may affect alignment of the underlayment assembly 100 on the roof deck.

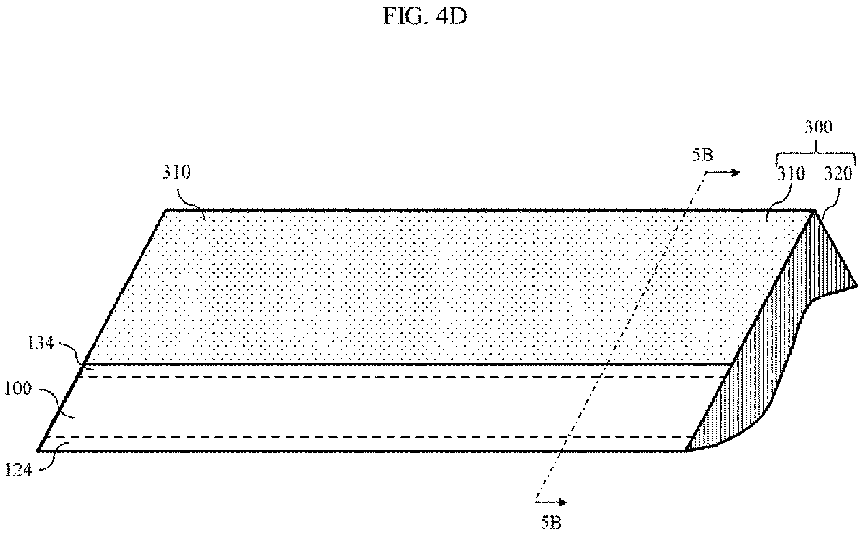

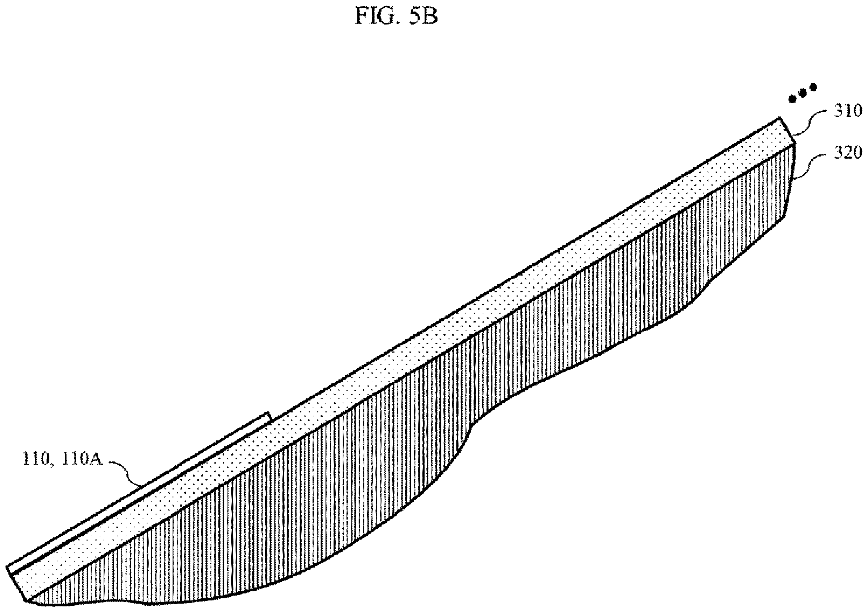

Referring to Figures 4D, when the liners 122, 132 are removed, the adhesive layers 124, 134 stick to the roof deck 310 and fix the base substrate 100 to the roof deck 310. The middle portion 154 is indirectly fixed to the roof deck 310 by the adhesive layers 124, 134 formed at the side end portion 152, 153. Figure 5B shows a cross-section of the based substrate attached to the roof deck 310.

### Installing Underlayment Assemblies

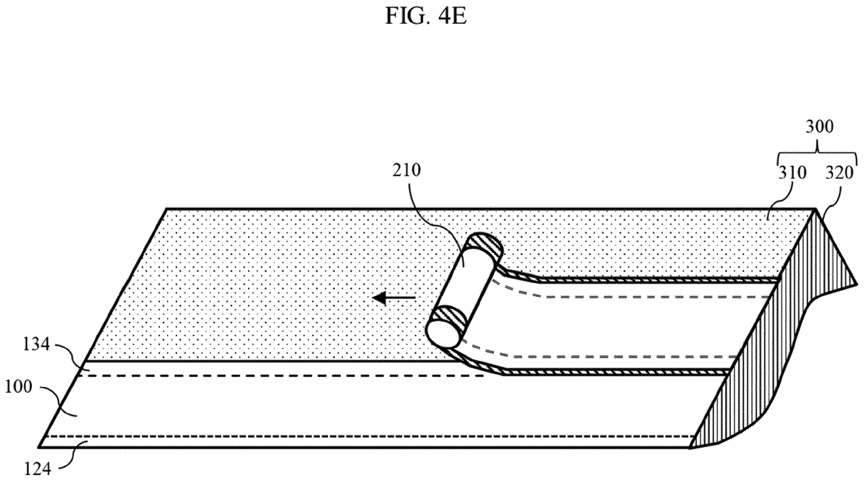

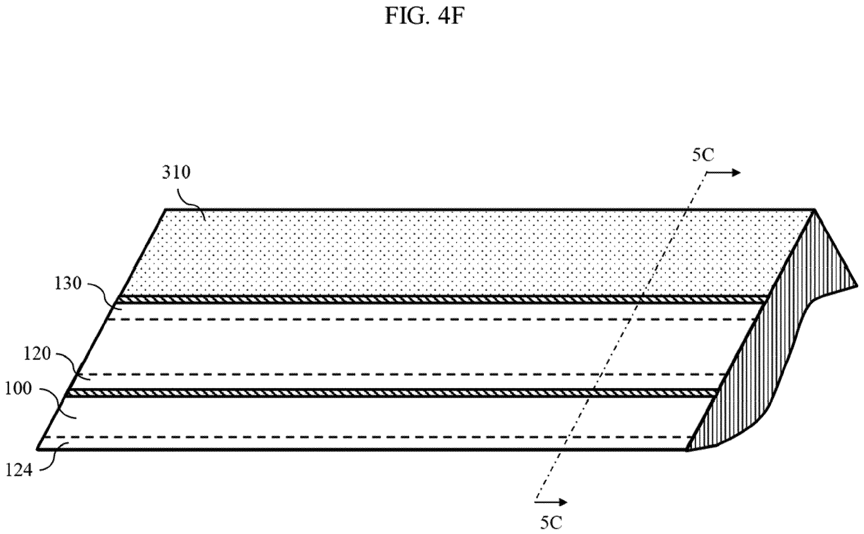

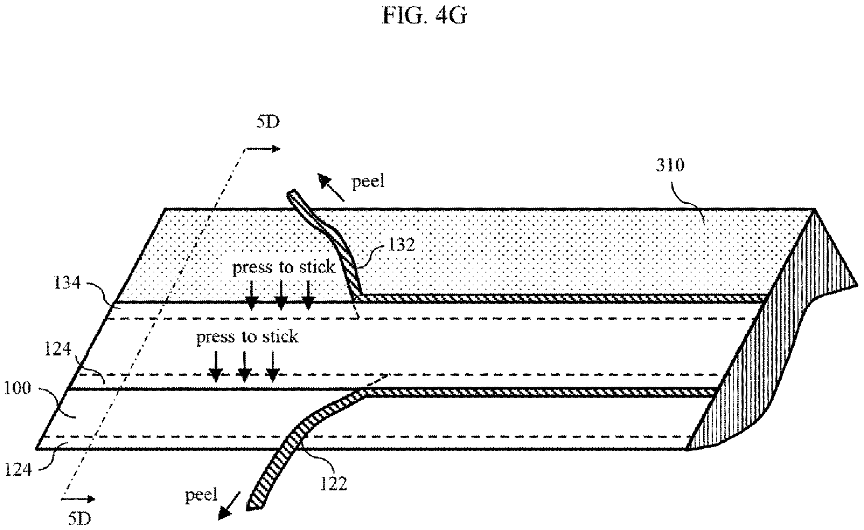

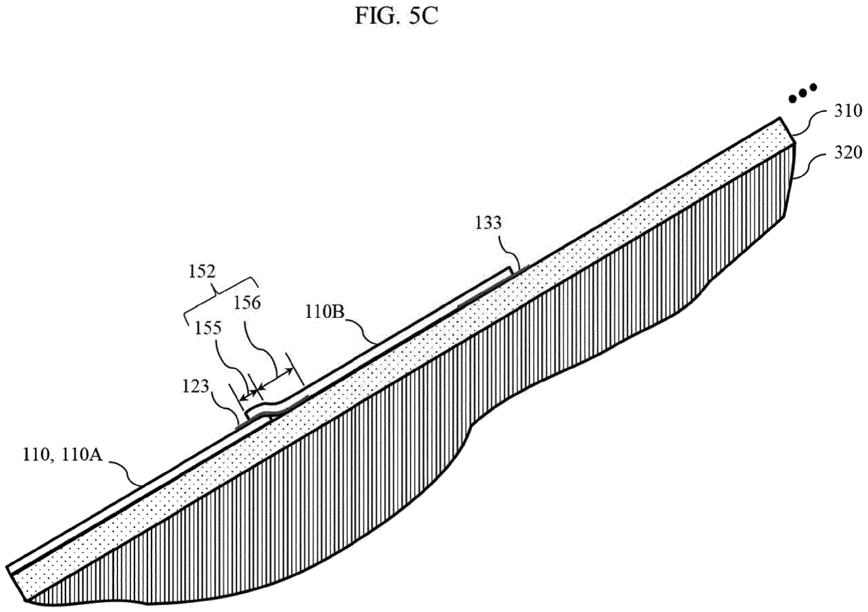

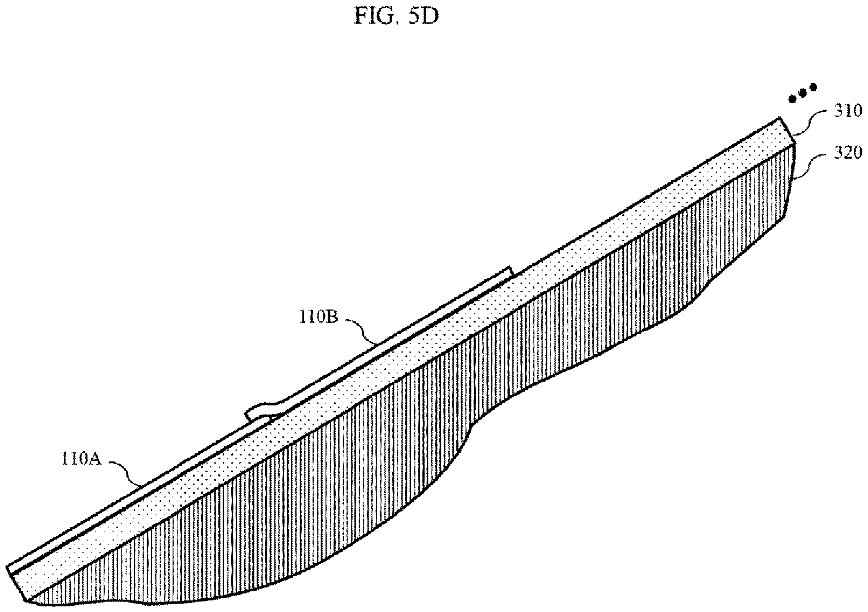

Referring to Figures 4E and 4F, a second roll 210 of a second underlayment assembly is rolled out. Referring to the cross-sectional view of Figure 5C, a side end portion 152 of the base substrate 110B of the second underlayment assembly overlaps the base substrate 110A of the first underlayment assembly. The side end portion 152 includes a first portion 155 aligned over the substrate 110A and includes a second portion 155 that does not overlaps the substrate 110A. When the liner 123 is removed as shown in Figure 4G, the first portion 155 is attached to the substrate 110A and the second portion 156 is attached directly to the roof deck 310 as shown in Figure 5D and Figure 6A.

Referring to Figure 6A, a single layer of adhesive 124 is attaching the substrate 100B to another substrate 100A and to the roof deck 310. When viewed over the first portion 155, the roof deck 310, the adhesive layer 134 of the first underlayment assembly, the base substrate 100A of the first underlayment assembly, the adhesive layer 124 of the second underlayment assembly, the base substrate 100B of the first underlayment assembly are arranged in order.

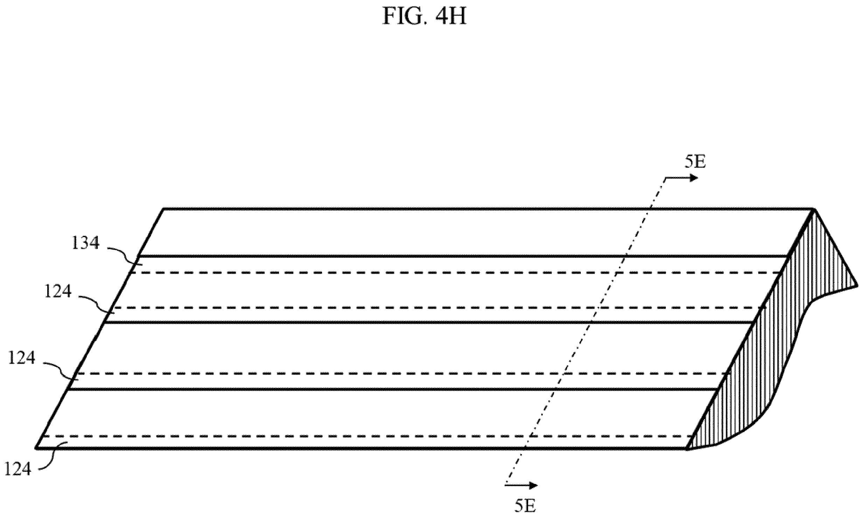

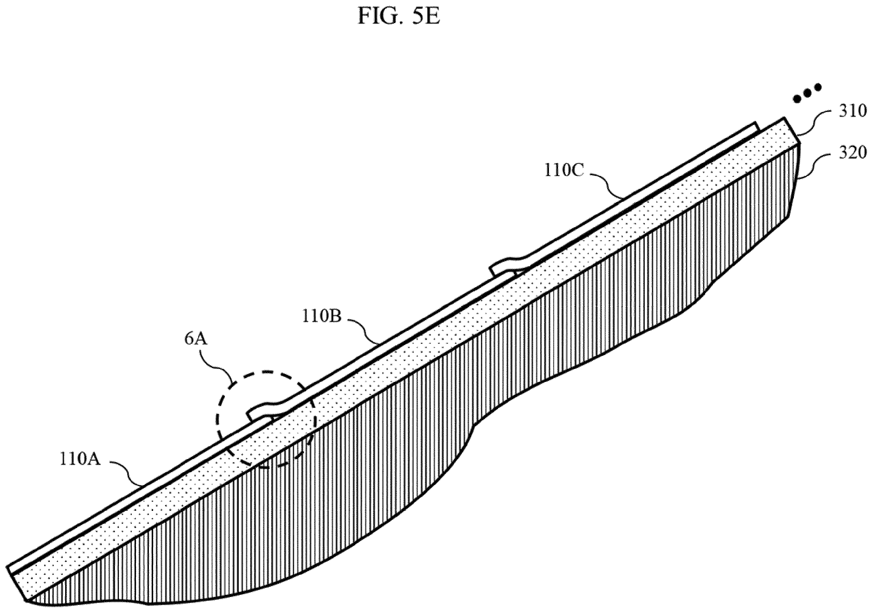

Referring to Figures 4H and 5E, subsequent to installation of the second underlayment assembly, a third underlayment assembly is installed repeating the same process. Multiple underlayment assemblies are installed to cover the roof deck 310.

### Installing Batten

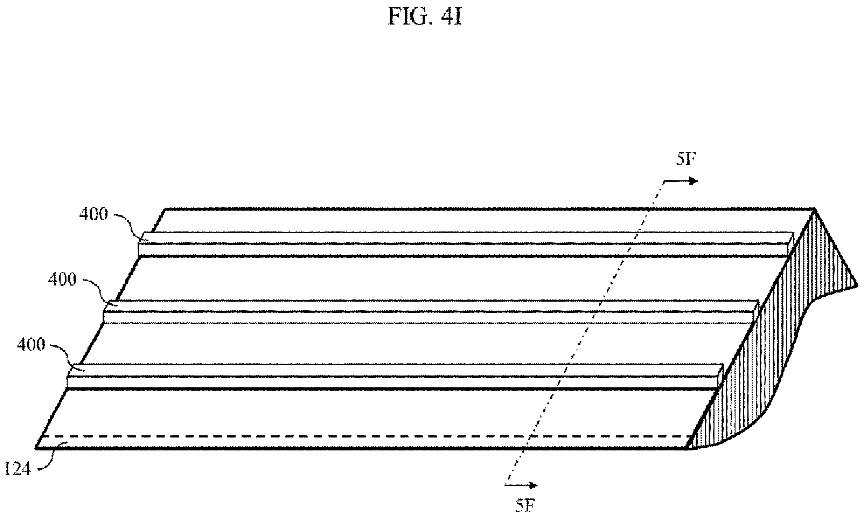

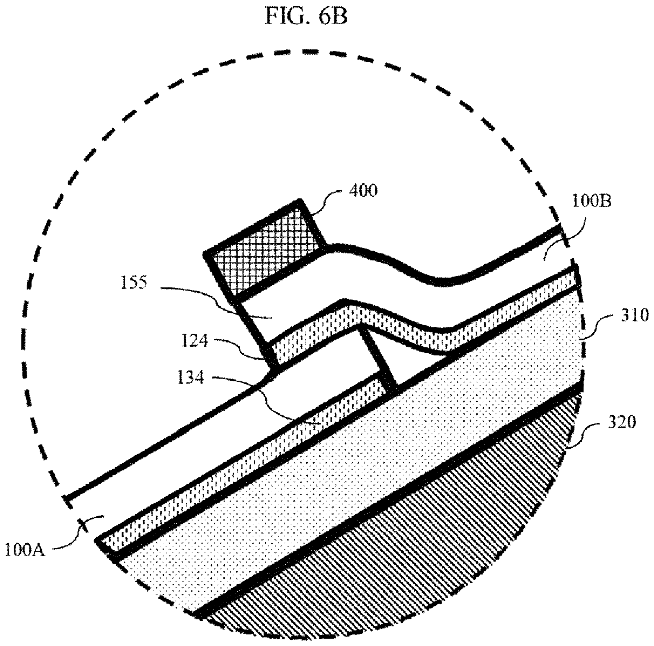

Referring to Figures 4I, 5F and 6B, one or more roof battens 400 are installed over the underlayment. In embodiments, referring to Figure 6B, the roof batten 400 is installed over a side end portion 152, 153 to overlap one or more adhesive layers 124, 134. In other embodiments, a roof batten 400 may not be installed over a side end portion 152, 153. In certain embodiments, one or more roof batten 400 can be installed over the middle portion 154 of the bases substrate 100 and does not overlap with an adhesive layer of underlayment assembly.

### Optional Mechanical Fixture

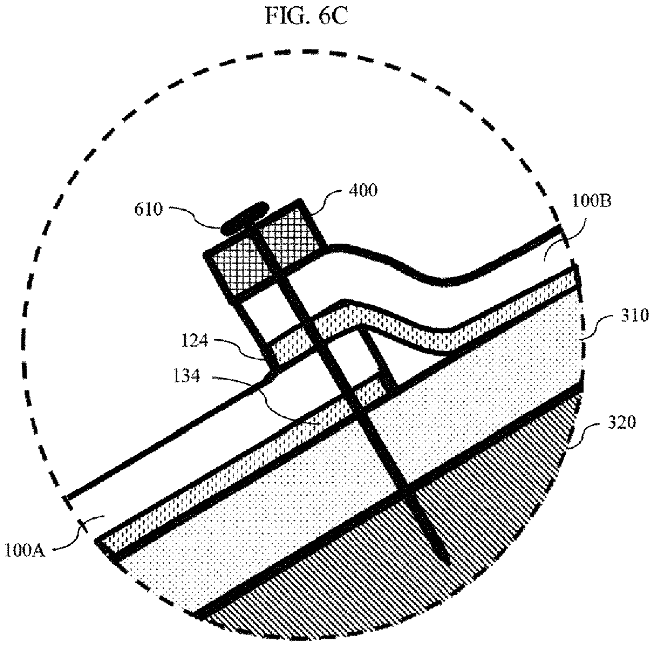

Referring to Figure 6C, in a non-limiting embodiment, a nail 610 is used to mechanically fix the underlayment to the roof structure 310, 320. The nail 610 is applied through the adhesive layers 124, 134. The adhesive layers act a sealant at an interface between the nail 610 and the base substrate 100A, 100B and prevents water penetration along the nail 610. In embodiments, an additional mechanical fixture (nail, staple, etc.) may not be necessary for installation of the underlayment.

### Double Layer Installation

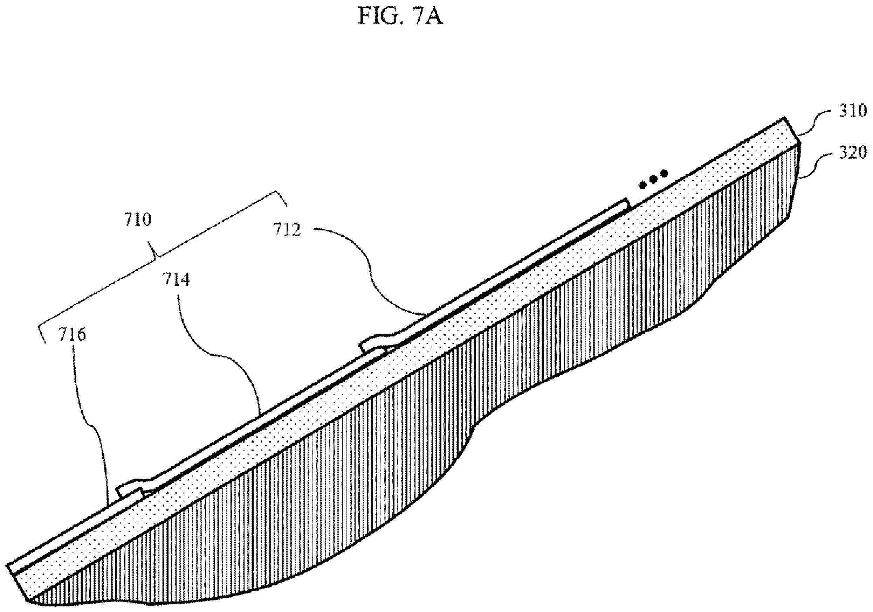

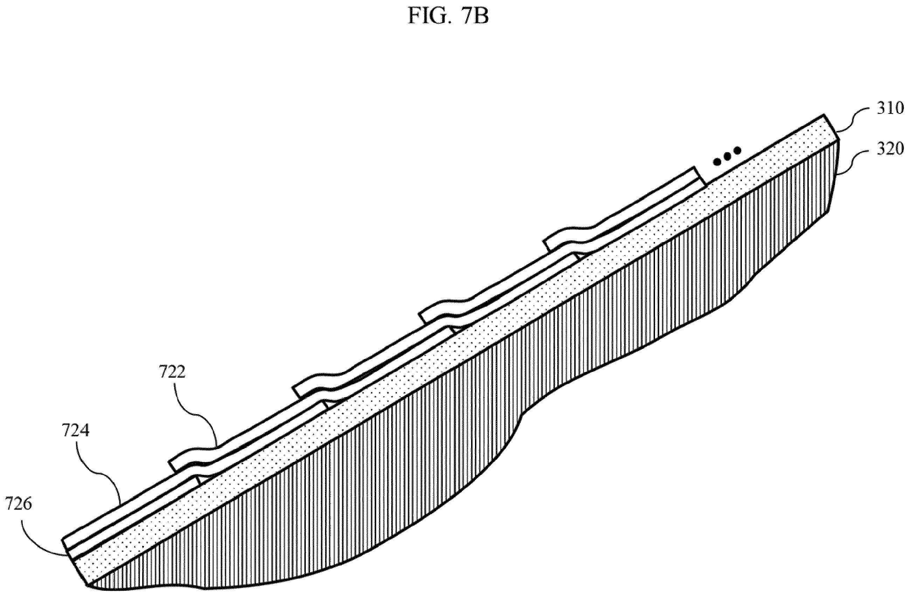

Figure 7A shows a single-layer installation of underlayment. Figure 7B shows a double-layer installation of underlayment. Referring to Figure 7A, a first layer 710 of underlayment is attached on the roof deck 310. The first layer 710 includes base substrates 712, 714, 716 attached to the roof deck 310. Each base substrate of the first layer can be attached to the roof deck 310 according to the process (peel-and-stick installation) of Figures 4A to 4H.

In the double-layer installation shown in Figure 7B, at least two layers of underlayment overlap the roof deck 310 when viewed in a direction perpendicular to the top surface of the roof deck 310. In some area, three layers of underlayment 722, 724, 726 overlap the roof deck when viewed in the direction perpendicular to the top surface of the roof deck.

In the first layer and the second layer shown in Figure 7B, two immediately neighboring underlayment substrates overlap each other. For example, the underlayment 722 in the first layer and the underlayment 724 in the second layer overlap each other, and the underlayment 724 in the first layer and the underlayment 726 in the second layer overlap each other.

### Crossing of Underlayment Extensions

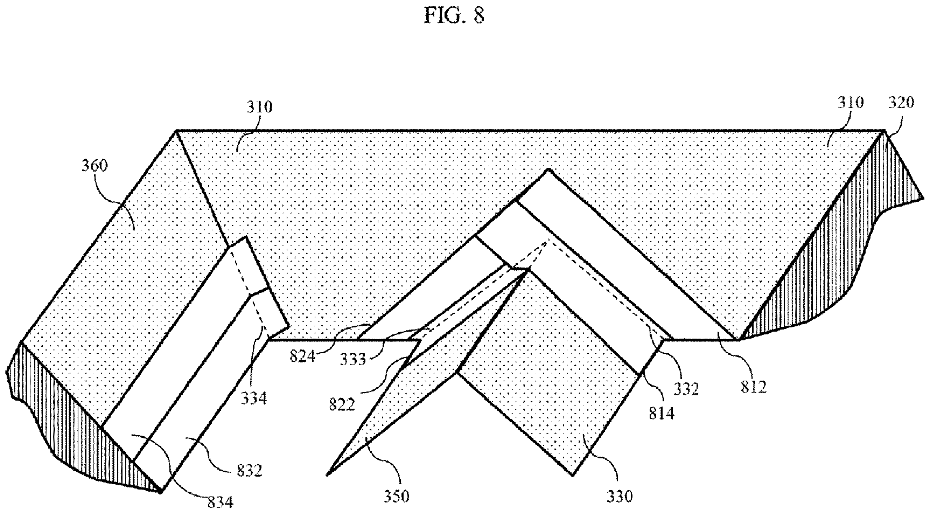

Figure 8 shows crossing of underlayment extensions over a roof deck structure. A first set of underlayment extensions 812, 814 are installed to extend along a direction substantially parallel to an interface 332 between a first roof deck 310 and a second roof deck 330. A second set of underlayment extensions 822, 824 are installed to extend along a direction substantially parallel to an interface 333 between the first roof deck 310 and a third roof deck 350. The first set and the second set of installed underlayment extensions overlap and cross each other over a ridge between the second rook deck 330 and the third roof deck 350.

A third set of underlayment extensions 832, 834 are installed to extend along a direction substantially parallel to the bottom edge of the fourth roof deck 360. The third set of underlayment extensions 832, 834 extends over an interface 334 (valley) between the first roof deck 310 and the fourth roof deck 360.

### Wide Range of Application Temperature

In embodiments, the underlayment assembly can be installed in a wide range of application temperatures (40°F - 240°F) without the use of a torch in cold climates or sloppy viscous asphalt in hot conditions.

### Non-limitins Embodiments

While the present invention has been described with reference to one or more preferred embodiments, which embodiments have been set forth in considerable detail for the purposes of making a complete disclosure of the invention, such embodiments are merely exemplary and are not intended to be limiting or represent an exhaustive enumeration of all aspects of the invention. The scope of the invention, therefore, shall be defined solely by the following claims. Further, it will be apparent to those of skill in the art that numerous changes may be made in such details without departing from the spirit and the principles of the invention.

## Claims

1. A method of installing underlayment of a roof comprising:
providing a first sheet of underlayment assembly comprising a first base substrate, an first adhesive layer formed over the first base substrate and a first polymeric liner formed over the first adhesive layer, wherein the first base substrate comprises a first edge portion, the first adhesive layer is formed over the first edge portion, and the first polymeric liner covers the first adhesive layer when viewed over the first sheet;
providing a second sheet of underlayment assembly comprising a second base substrate, an second adhesive layer formed over the second base substrate and a second polymeric liner formed over the second adhesive layer, wherein the second base substrate comprises a second edge portion, the second adhesive layer is formed over the second edge portion, and the second polymeric liner covers the first adhesive layer when viewed over the second sheet;
placing the first sheet of underlayment assembly over a slanted surface of a roof structure such that the first edge portion is arranged along an installation direction over the slanted surface and such that the first polymeric liner contacts the slanted surface and is interposed between the slanted surface and the first adhesive layer;
subsequent to placing the first sheet, removing the first polymeric liner from the first sheet of underlayment assembly such that the first adhesive layer sticks to the slanted surface of the roof structure such that the first sheet is fixed to the slanted surface without using a mechanical fastener through the first sheet;
placing the second sheet of underlayment assembly over the first sheet of underlayment assembly such that the second edge portion overlaps the first edge portion along the installation direction and such that the second polymeric liner contacts the first edge portion and is interposed between the first edge portion and the second adhesive layer; and
subsequent to placing the second sheet, removing the second polymeric liner from the second sheet of underlayment assembly such that the second adhesive layer sticks to the first edge portion without using a mechanical fastener through the second sheet.

2. The method of claim 1, wherein the first polymeric liner comprises a first grip portion extending further from the first edge portion such that the first grip portion is exposed over the slanted surface, wherein removing the first polymeric liner comprises pulling the exposed first grip portion.

3. The method of claim 1, wherein the second polymeric liner comprises a second grip portion extending further from the second edge portion such that the second grip portion is exposed over the first sheet, wherein removing the second polymeric liner comprises pulling the exposed second grip portion.

4. The method of claim 1, further comprising:
subsequent to removing the second polymeric liner, placing a roof batten along the installation direction over the second edge portion such that the roof batten overlaps the first edge portion and the second first edge portion when viewed in a cross section perpendicular to the slanted surface of the roof structure.

5. The method of claim 4, further comprising:
placing a nail through the roof batten, the first edge portion, the second first edge and slanted surface to fix the roof batten to the roof structure.

6. An underlayment assembly for roofing application comprising:
a base substrate sheet extending along a longitudinal direction, wherein the base substrate comprises a first edge portion extending along the longitudinal direction, a second edge portion apart from the first edge portion and extending the longitudinal direction, and a middle portion interposed between the first edge portion and the second edge portion;
a first adhesive layer formed over the first edge portion;
a first polymeric liner formed over the first adhesive layer and covering the first adhesive layer;
a second adhesive layer formed over the second edge portion; and
a second polymeric liner formed over the second adhesive layer and covering the second adhesive layer;

7. The underlayment assembly of claim 6, wherein the first polymeric liner includes a first grip portion extending further from the first edge portion of the base substrate such that the first grip portion does not overlap the base substrate or the first polymeric liner when viewed over the underlayment assembly.

8. The underlayment assembly of claim 7, wherein the second polymeric liner includes a second grip portion extending further from the second edge portion of the base substrate such that the second grip portion does not overlap the base substrate or the second polymeric liner viewed over the underlayment assembly.
